# EUROPÄISCHE PATENTSCHRIFT

(11) **EP 1 534 570 B1**
(45) Veröffentlichungstag und Bekanntmachung des Hinweises auf die Patenterteilung: **05.03.2008**
(21) Anmeldenummer: 03793814.9
(22) Anmeldetag: 05.09.2003
(51) Int. Cl.: B61D 19/00, B61D 17/08, B61D 17/04, E06B 5/16, B60J 5/04

(54) **TÜRSYSTEM FÜR FAHRZEUGE**
DOOR SYSTEM FOR VEHICLES
SYSTEME DE PORTE POUR VEHICULES

(30) Priorität: 05.09.2002 DE 10240967
(43) Veröffentlichungstag der Anmeldung: 01.06.2005
(73) Patentinhaber: Bombardier Transportation GmbH, 10785 Berlin (DE)
(72) Erfinder: KLAMKA, Heinz, 16761 Hennigsdorf (DE); PROCKAT, Jan, 12559 Berlin (DE)
(74) Vertreter: Karlhuber, Mathias
(86) Internationale Anmeldenummer: PCT/EP2003/009891
(87) Internationale Veröffentlichungsnummer: WO 2004/022404

(56) Entgegenhaltungen:
- DE-A- 19 844 813
- FR-A- 2 656 271
- PATENT ABSTRACTS OF JAPAN vol. 2000, no. 05, 14. September 2000 (2000-09-14) & JP 2000 038129 A (KAWASAKI HEAVY IND LTD), 8. Februar 2000 (2000-02-08)
- PATENT ABSTRACTS OF JAPAN vol. 2000, no. 15, 6. April 2001 (2001-04-06) & JP 2000 344096 A (KAWASAKI HEAVY IND LTD), 12. Dezember 2000 (2000-12-12)
- PATENT ABSTRACTS OF JAPAN vol. 2000, no. 19, 5. Juni 2001 (2001-06-05) & JP 2001 030898 A (KAWASAKI HEAVY IND LTD), 6. Februar 2001 (2001-02-06)

## Beschreibung

Die Erfindung betrifft ein Türsystem für Fahrzeuge nach dem Oberbegriff des Anspruchs 1. Die Erfindung ist geeignet für - aber nicht beschränkt auf - den Einsatz bei Schienenfahrzeugen für den Personenverkehr, insbesondere zur leichten Montage von derartigen Türsystemen für Schienenfahrzeuge.

Bisher werden an den Profilen des Wagenkastenrohbaus, die den Türausschnitt begrenzen, Dichtleisten ausgerichtet und befestigt. Dies erfolgt nach dem vorangegangenen Einbau und der Ausrichtung der Türblätter und des Türantriebes mit der Türsteuerungseinheit.

Gleichfalls sind massive Türrahmen für vormontierte Türsysteme bekannt, die mittels konventioneller mechanischer Verbindungstechnik am Wagenkasten befestigt werden.

Die separate Montage und Justage von Türblättern, Dichtleisten und Türantrieb mit Türsteuerung erfordert einen hohen manuellen Aufwand im Bereich der Endmontage, was hohe Durchlaufzeiten der Fahrzeuge nach sich zieht.

Der Einsatz massiver Türrahmen erfordert deutlich mehr Bauraum in der Seitenwand des Wagenkastenrohbaus des Fahrzeuges. Dieser Bauraum ist jedoch speziell bei Nahverkehrsfahrzeugen mit mehreren Türen je Fahrzeugseite und gleichzeitigen hohen strukturellen Anforderungen an das Fahrzeug oftmals nicht in der gewünschten Größe vorhanden. Eine Nutzung der strukturellen Eigenschaften des massiven Türrahmens innerhalb der Statik des Gesamtwagenkastenrohbaus erfolgt nicht. Gleichzeitig ist ein Anpassen der starren massiven Türrahmen an die Toleranzen der Konturen des Türausschnittes des Wagenkastenrohbaus nicht möglich.

Des weiteren sind bei modular aufgebauten Wagenkästen Türmodule bekannt, welche jedoch neben der reinen Tragfunktion des Türsystems einen hohen Anteil an zusätzlich integrierten Funktionen, wie Luftkanäle, Innenraumoberflächen etc., aufweisen. Hierbei wird das Problem des Toleranzausgleiches zwischen Türblattkante und Türdichtebene zwar gelöst, jedoch gleichzeitig ein neues Toleranzausgleichsproblem, in der Verbindung Modul zu Nachbarmodul, geschaffen.

Die DE 198 44 813 A1 beschreibt ein Verfahren zum Einbau von Türrahmen in eine begrenzte Türöffnung einer Seitenwand eines Wagenkastens, wobei der Türrahmen gegenüber angepassten Randzonen der Türöffnung positioniert und mittels Befestigungsmitteln daran festgesetzt wird. Ein biegeweicher Türrahmen wird dabei in einer demgegenüber starren Haltevorrichtung zu den Randzonen der Türöffnung hingeführt und an den Randzonen festgesetzt. Anschließend wird die Haltevorrichtung vom Türrahmen gelöst und entfernt.

Auch hierbei ist nachteilig, dass ein Toleranzausgleich bei der Fertigung der Türöffnung nur begrenzt möglich ist. Weiterhin erfolgt keine Nutzung der strukturellen Eigenschaften des Türrahmens innerhalb der Statik des Gesamtwagenkastenrohbaus. Auf den Wagenkastenrohbau wirkende Kräfte, beispielsweise im Fahrbetrieb beim Bremsen oder Beschleunigen oder beim Befahren von Bögen, werden auch auf Türelemente, wie beispielsweise Türrahmen und Türblättern übertragen. Dies muss bei der Konstruktion berücksichtigt werden und führt zu einem erhöhten Aufwand bei der Herstellung.

Aufgabe der Erfindung ist es, die beschriebenen Nachteile des Standes der Technik zu beseitigen und insbesondere ein Türsystem für Fahrzeuge vorzuschlagen, welches leicht und einfach aufgebaut ist und welches gestattet, alle Türkomporienten vorzumontieren, minimalen zusätzlichen Platzbedarf hat und flexibel genug ist, die Toleranzen der Konturen des Türausschnittes des Wagenkastenrohbaus auszugleichen.

Dabei soll das Türträgersystem, welches die Türblätter und/oder die Türantriebseinheit und/oder die Türsteuerungseinheit trägt, einfach zu montieren sein. Dieses Türträgersystem soll weiterhin das Türdichtsystem und den Toleranzausgleich zum Wagenkastenrohbau zur Verfügung stellen.

Diese Aufgabe wird durch ein Türsystem für Fahrzeuge gemäß den Merkmalen des Anspruchs 1 bzw. 15 gelöst.

Zweckmäßige Ausgestaltungen und Weiterbildungen der Erfindung sind in den Unteransprüchen angegeben.

Das Türsystem für Fahrzeuge, insbesondere Schienenfahrzeuge umfasst einen Türrahmen und mindestens ein Verbindungselement zum Einbau in einen Fahrzeugrohbau. Erfindungsgemäß werden Mittel zum definierten Federn und/oder Dämpfen von Spannungskräften zwischen Fahrzeugrohbau und Türrahmen und/oder zwischen Fahrzeugrohbau und einem Türblattsystem angeordnet.

Hauptvorteil ist, dass es durch den gezielten Einbau derartiger Mittel möglich ist, Spannungen und Kräfte, die vom Wagenkastenrohbau auf das Türsystem übertragen werden, zu verringern und/oder zu dämpfen.

Ein weiterer Vorteil der erfindungsgemäßen Lösung besteht in einem geringen Platzbedarf, d. h. der notwendige Türausschnitt im Wagenkastenrohbau ist nur unwesentlich größer als für die Funktion der Tür notwendig. Somit ist die Statik des Gesamtwagenkastenrohbaus nicht zusätzlich beeinträchtigt. Vielmehr können durch den gegenüber dem Einsatz von massiven Türrahmen gewonnenen Bauraum die Türsäulen des Wagenkastenrohbaus größer ausgelegt und somit die statischen und dynamischen Eigenschaften des Wagenkastenrohbaus deutlich verbessert werden. Weiterhin vorteilhaft sind das geringe Gewicht, welches kaum einen Einfluss auf die Massebilanz des Fahrzeuges hat, sowie der geringe Integrationsgrad (z. B. keine integrierte Verkleidungsfunktion), der die Möglichkeit des Einsatzes von Standardtürrahmen eröffnet. Weiterhin sind Vormontage und Transport zum Fahrzeug inklusive Einbau durch eine stabile Montagevorrichtung möglich. Die optimierte Flexibilität des Rahmens gestattet zusätzlich eine gute Anpassung an die Toleranzen der Konturen des Türausschnittes des Wagenkastenrohbaus.

Die Erfindung wird anhand des in der Zeichnung dargestellten Ausführungsbeispiels nachfolgend näher erläutert. Es zeigt schematisch und nicht maßstäblich
- Fig. 1: einen Detailschnitt eines erfindungsgemäßen Türsystems aus einem Wagenkasten eines Schienenfahrzeugs und
- Fig. 2: eine Explosionsdarstellung einer Befestigungsart des erfindungsgemäßen Türsystems am Wagenkasten.

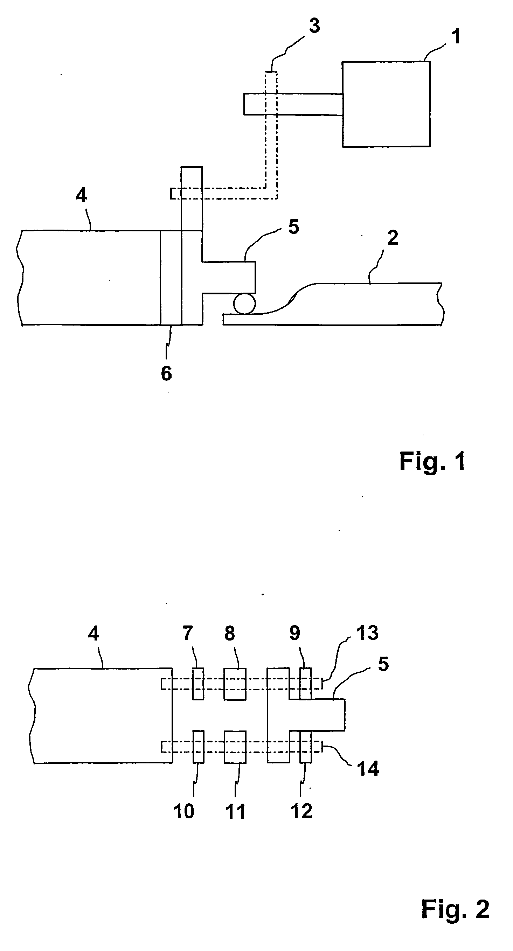

Fig. 1 zeigt einen Ausschnitt aus einem Türsystem aus einem Wagenkasten eines Schienenfahrzeugs. Dargestellt sind ein Teil einer multifunktionalen Vorrichtung 1, ein Teil eines Türblattsystems 2, Stellschrauben 3, ein Teil eines Wagenkastenrohbaus 4, ein Teil eines Türrahmens 5 und ein Feder-Dämpfungssystem 6.

Es wird ein flexibler leichter Türrahmen 5 verwendet, der so gestattet ist, dass maßlich die Toleranzen der Kontur des Türausschnittes eines Wagenkastenrohbaus 4 plus einer Zugabe für ein Feder-Dämpfungssystem 6 berücksichtigt sind. Der Türrahmen 5 wird als erstes an einer später wieder zu entfernenden multifunktionalen Vorrichtung 1 befestigt, welche die Funktionen Stützen, Transportieren und Montieren zur Verfügung stellt. Anschließend werden alle zu montierenden Bestandteile eines Türblattsystems 2 am Türrahmen 5 montiert und danach das Türsystem mit dem Türblattsystem 2 und dem Türrahmen 5 vorjustiert und gegebenenfalls abschließend getestet. Zum Einbau in das Fahrzeug wird das vormontierte Türsystem mit der multifunktionalen Vorrichtung 1 in den entsprechenden Türausschnitt des Fahrzeuges gesetzt und mittels der Stellschrauben 3 der Vorrichtung 1 an die Kontur des Türausschnittes des Wagenkastenrohbaus 4 angepasst. Anschließend erfolgt ein Befestigen des Türrahmens 5 mit dem Wagenkastenrohbau 4 und Abdichten der durch die Toleranzen entstandenen Spalte. Vor oder während des Befestigens des Türrahmens 5 mit dem Wagenkastenrohbau 4 wird das Feder-Dämpfungssystem 6 eingebracht.

In Fig. 2 ist die Befestigung des Türrahmens 5 am Wagenkastenrohbau 4 als Explosionsdarstellung näher dargestellt. Fig. 2 zeigt neben Teilen des Wagenkastenrohbaus 4 und des Türrahmens 5 so genannte Ganzmetallkissen 7, 8, 9, 10, 11, 12 und Befestigungselemente 13,14.

Das Feder-Dämpfungssystem 6 besteht in diesem Ausführungsbeispiel im Wesentlichen aus einem oder mehreren Ganzmetallkissen 7, 8, 10, 11, welche zwischen dem Türrahmen 5 und dem Wagenkastenrohbau 4 angeordnet sind. Mittels der Befestigungselemente 13, 14, beispielsweise Verschraubungen und/oder Nietverbindungen, sind der Türrahmen 5 und der Wagenkastenrohbau 4 miteinander verbunden. Bestehende Toleranzen bzw. definierte Feder- und/oder Dämpfungscharakteristiken zwischen Türrahmen 5 und Wagenkastenrohbau 4 können beispielsweise durch Verwendung unterschiedlicher Ganzmetallkissen 7, 8,10,11 und/oder durch Verwendung mehrerer Ganzmetallkissen 7, 8, 10, 11 erfolgen. Auch zusätzliche, in den Fig. nicht dargestellte Abstandhalter können zum Ausgleich von Toleranzen verwendet werden.

Alternativ zu diesem Einbauort zwischen dem Wagenkastenrohbau 4 und dem Türrahmen 5 ist auch jeder andere Einbauort möglich, der ein definiertes Federn und/oder Dämpfen von Spannungskräften zwischen dem Fahrzeugrohbau 4 und dem Türrahmen 5 und/oder zwischen dem Fahrzeugrohbau 4 und dem Türblattsystem 2 bewirkt. In diesem Ausführungsbeispiel sind zusätzlich Ganzmetallkissen 9, 12 an den Befestigungselementen 13, 14 angeordnet.

Die Ganzmetallkissen sind in ihrer Form und in ihren Abmessungen dem Verwendungszweck angepasst, d. h. sie sind auf die im Betrieb des Fahrzeugs zu erwartenden Lasten an dem Türsystem abgestimmt.

In diesem Ausführungsbeispiel bestehen die Ganzmetallkissen 7, 8, 9, 10, 11, 12 aus CrNi-Stahldraht. Die Federkennlinie hat bei diesen Ganzmetallkissen 7, 8, 9, 10,11,12 einen progressiven Verlauf. Die Ganzmetallkissen 7, 8, 9,10,11, 12 haben den Vorteil einer nahezu konstanten Eigenfrequenz über einen weiten Lastbereich, einer stetig zunehmenden Wegbegrenzung und einer hohen dynamischen Belastbarkeit bei nur geringer Federwegzunahme. Vorzugsweise werden die Ganzmetallkissen 7, 8, 9,10,11,12 unter Vorspannung eingesetzt. Die Federkennlinie der Ganzmetallkissen 7, 8, 9, 10, 11, 12 weist eine ausgeprägte Hysterese auf; deren Betrag ein Maß für die vorhandene Dämpfung darstellt. Diese wird durch die Reibung zwischen vielen einzelnen Windungen des CrNi-Stahldrahts bewirkt. Entsprechend der gewünschten Feder- und/oder Dämpfungscharakteristik werden Anzahl, Form, Größe und/oder Beschaffenheit der Ganzmetallkissen 7, 8, 9, 10, 11, 12 ausgewählt.

Weitere Vorteile der Ganzmetallkissen 7, 8, 9, 10, 11, 12 liegen in ihrer Korrosionsbeständigkeit, beispielsweise gegen Öle, Fette, Lösungsmittel, Säuren, Flüssigkeiten und Staub, in ihrer Alterungsbeständigkeit und in ihrer Einsetzbarkeit in einem für den Anwendungszweck ausreichend weiten Temperaturbereich, wobei gleichzeitig eine geringe Temperaturabhängigkeit gegeben ist.

Alternativ zur oder in Kombination mit der Verwendung von Ganzmetallkissen ist auch die Anwendung von speziellen Klebstoffen als Feder-Dämpfungssystem 6 möglich.

Die erfindungsgemäße Lösung kann bei allen Arten von Türsystemen, beispielsweise für Schiebe-, Dreh- und Schwenk- bzw. Schwingtüren, Anwendung finden.

Durch den gezielten Einbau derartiger Feder-Dämpfungssysteme ist es möglich, Spannungen und Kräfte, die vom Wagenkastenrohbau auf das Türsystem übertragen werden, zu verringern und/oder zu dämpfen. Da das Verhalten der verwendeten Feder-Dämpfungssysteme definiert ist, können diese bei der Konstruktion von Wagenkastenrohbau und Türsystem Berücksichtigung finden. Dies ermöglicht eine Reduzierung des Materialaufwandes.

## Patentansprüche

1. Türsystem für Fahrzeuge, insbesondere Schienenfahrzeuge, umfassend einen Türrahmen (5) und mindestens ein Verbindungselement zum Einbau in einen Fahrzeugrohbau (4), **gekennzeichnet durch** Mittel zum definierten Federn und/oder Dämpfen von Spannungskräften zwischen dem Fahrzeugrohbau (4) und dem Türrahmen (5).

2. Türsystem nach Anspruch 1, **dadurch gekennzeichnet, dass** die Mittel zum definierten Federn und/oder Dämpfen ein oder mehrere Ganzmetallkissen (7, 8, 9, 10, 11, 12), insbesondere bestehend aus CrNi-Stahldraht, umfassen.

3. Türsystem nach Anspruch 1 oder 2, **dadurch gekennzeichnet, dass** die Mittel zum definierten Federn und/oder Dämpfen eine oder mehrere Klebstoffverbindungen umfassen.

4. Türsystem nach einem der vorhergehenden Ansprüche, **dadurch gekennzeichnet, dass** die Feder- und/oder Dämpfungscharakteristiken der Mittel zum definierten Federn und/oder Dämpfen einstellbar sind.

5. Türsystem nach einem der vorhergehenden Ansprüche, **dadurch gekennzeichnet, dass** ein oder mehrere Ganzmetallkissen (7, 8, 10, 11) zwischen Türrahmen (5) und Wagenkastenrohbau (4) angeordnet sind.

6. Türsystem nach einem der vorhergehenden Ansprüche, **dadurch gekennzeichnet, dass** ein oder mehrere Ganzmetallkissen (7,8,10,11) und ein oder mehrere Abstandhalter zwischen Türrahmen (5) und Wagenkastenrohbau (4) angeordnet sind.

7. Türsystem nach einem der vorhergehenden Ansprüche, **dadurch gekennzeichnet, dass** der Türrahmen (5) und der Wagenkastenrohbau (4) mittels Befestigungselementen (13, 14), insbesondere Verschraubungen und/oder Nietverbindungen, miteinander verbunden sind.

8. Türsystem nach einem der vorhergehenden Ansprüche, **dadurch gekennzeichnet, dass** die Mittel zum definierten Federn und/oder Dämpfen Ganzmetallkissen (7, 8, 9, 10, 11, 12) umfassen, die mittels Befestigungselementen (13, 14) am Wagenkastenrohbau (4) und/oder am Türrahmen (5) angeordnet sind.

9. Türsystem nach einem der vorhergehenden Ansprüche, **dadurch gekennzeichnet, dass** die Mittel zum definierten Federn und/oder Dämpfen Ganzmetallkissen (7, 8, 9, 10, 11, 12) umfassen, die in ihrer Form und in ihren Abmessungen dem Verwendungszweck angepasst sind.

10. Türsystem nach einem der vorhergehenden Ansprüche, **dadurch gekennzeichnet, dass** die Mittel zum definierten Federn und/oder Dämpfen mindestens ein Ganzmetallkissen (7, 8, 9, 10, 11, 12) umfassen, dessen Federkennlinie einen progressiven Verlauf aufweist.

11. Türsystem nach einem der vorhergehenden Ansprüche, **dadurch gekennzeichnet, dass** die Mittel zum definierten Federn und/oder Dämpfen mindestens ein Ganzmetallkissen (7, 8, 9, 10, 11, 12) umfassen, das unter Vorspannung eingesetzt ist.

12. Türsystem nach einem der vorhergehenden Ansprüche, **gekennzeichnet durch** eine nach dem Einbau des Türsystems in den Fahrzeugrohbau (4) entfernbare, multifunktionale Vorrichtung (1), welche zum Stützen, Transportieren und Montieren des Türrahmens (5) ausgebildet ist und am Türrahmen (5) vor dem Einbau in den Fahrzeugrohbau (4) befestigt ist, wobei die Vorrichtung (1) Mittel zum Justieren des Türrahmens (5) im Fahrzeugrohbau (4) aufweist.

13. Türsystem nach einem der vorhergehenden Ansprüche, **dadurch gekennzeichnet, dass** das Türsystem zur Verwendung als Schiebe-, Dreh- und Schwenk- und/oder Schwingtür ausgebildet ist.

14. Türsystem für Fahrzeuge, insbesondere Schienenfahrzeuge, umfassend ein Türblattsystem (2) und mindestens ein Verbindungselement zum Einbau in einen Fahrzeugrohbau (4), **gekennzeichnet durch** Mittel zum definierten Federn und/oder Dämpfen von Spannungskräften zwischen dem Fahrzeugrohbau (4) und dem Türblattsystem (2).

15. Türsystem nach Anspruch 15, **dadurch gekennzeichnet, dass** die Mittel zum definierten Federn und/oder Dämpfen ein oder mehrere Ganzmetallkissen (7, 8, 9, 10, 11,12), insbesondere bestehend aus CrNi-Stahldraht, umfassen.

16. Türsystem nach Anspruch 15 oder 16, **dadurch gekennzeichnet, dass** die Mittel zum definierten Federn und/oder Dämpfen eine oder mehrere Klebstoffverbindungen umfassen.

17. Türsystem nach einem der Ansprüche 15 bis 17, **dadurch gekennzeichnet, dass** die Feder- und/oder Dämpfungscharakteristiken der Mittel zum definierten Federn und/oder Dämpfen einstellbar sind.

18. Türsystem nach einem der Ansprüche 15 bis 18, **dadurch gekennzeichnet, dass** die Mittel zum definierten Federn und/oder Dämpfen Ganzmetallkissen (7, 8, 9, 10, 11, 12) umfassen, die mittels Befestigungselementen (13, 14) am Wagenkastenrohbau (4) angeordnet sind.

19. Türsystem nach einem der Ansprüche 15 bis 19, **dadurch gekennzeichnet, dass** die Mittel zum definierten Federn und/oder Dämpfen Ganzmetallkissen (7, 8, 9,10, 11, 12) umfassen, die in ihrer Form und in ihren Abmessungen dem Verwendungszweck angepasst sind.

20. Türsystem nach einem der Ansprüche 15 bis 20, **dadurch gekennzeichnet, dass** die Mittel zum definierten Federn und/oder Dämpfen mindestens ein Ganzmetallkissen (7, 8, 9, 10, 11, 12) umfassen, dessen Federkennlinie einen progressiven Verlauf aufweist.

21. Türsystem nach einem der Ansprüche 15 bis 21, **dadurch gekennzeichnet, dass** die Mittel zum definierten Federn und/oder Dämpfen mindestens ein Ganzmetallkissen (7, 8, 9, 10, 11, 12) umfassen, das unter Vorspannung eingesetzt ist.

22. Türsystem nach einem der Ansprüche 15 bis 22, **dadurch gekennzeichnet, dass** das Türsystem zur Verwendung als Schiebe-, Dreh- und Schwenk- und/oder Schwingtür ausgebildet ist.

## Claims

1. Door system for vehicles, in particular railway vehicles, incorporating a door housing (5) and at least one constituent jointing element for installation into a vehicle framework (4), distinctive by the method of specific softening and/or damping of the tension between the vehicle framework (4) and the door housing (5).

2. Door system according to claim 1, **characterized in that** the methods of specific softening and/or damping incorporates one or several metallic cushions (7, 8, 9, 10, 11, 12), in particular consisting of CrNi steel wire.

3. Door system according to claim 1 or 2, **characterized in that** the method of specific softening and/or damping incorporates one or more adhesive joints.

4. Door system according to one of the above claims, **characterized in that** the softening and/or damping characteristics of the specific softening and/or damping method employed are adjustable.

5. Door system according to one of the above claims, **characterized in that** one or several metallic cushions (7, 8, 10, 11) have been installed between the door housing (5) and the vehicle framework (4).

6. Door system according to one of the above claims, **characterized in that** one or more metallic cushions (7, 8, 10, 11) and one or several spacing pieces have been installed between the door housing (5) and the vehicle framework (4) .

7. Door system according to one of the above claims, **characterized in that** the door housing (5) and the vehicle framework (4) have been connected by fastenings (13, 14), in particular by screw and/or riveted joints.

8. Door system according to one of the above claims, **characterized in that** the method of specific softening and/or damping incorporates metallic cushions (7, 8, 9, 10, 11, 12), which by means of fastenings (13, 14) have been installed in the vehicle framework (4) and/or the door housing (5).

9. Door system according to one of the above claims, **characterized in that** the method of specific softening and/or damping incorporates metallic cushions (7, 8, 9, 10, 11, 12), which are suitable for the purpose by their shape and dimensions.

10. Door system according to one of the above claims, **characterized in that** the method of specific softening and/or damping incorporates at least one metallic cushion (7, 8, 9, 10, 11, 12), demonstrating a progressive elasticity curve.

11. Door system according to one of the above claims, **characterized in that** the method of specific softening and/or damping incorporates at least one metallic cushion (7, 8, 9, 10, 11, 12), that has been installed under tension.

12. Door system according to one of the above claims, **characterized by** a multifunctional mechanism (1), removable after the installation of the door system into the vehicle framework (4), which has been developed for the support, transport and assembly of the door housing (5) and has been fastened to the door housing (5) prior to installation in the vehicle framework (4), whereby the mechanism (1) provides the method of adjusting the door housing (5) in the vehicle framework (4).

13. Door system according to one of the above claims, **characterized in that** the door system has been developed for application as a sliding, revolving, swivelling or swinging door.

14. Door system for vehicles, in particular railway vehicles, incorporating a door panel system (2) and at least one constituent jointing element for installation into a vehicle framework (4), **characterized by** the method of specific softening and/or damping of the tension between the vehicle framework (4) and the door panel system (2).

15. Door system according to claim 14, **characterized in that** the method of specific softening and/or damping incorporates one or several metallic cushions (7, 8, 9, 10, 11, 12), in particular consisting of CrNi steel wire.

16. Door system according to claim 14 or 15, **characterized in that** the method of specific softening and/or damping incorporates one or more adhesive joints.

17. Door system according to one of claims 14 to 16, **characterized in that** the softening and/or damping characteristics of the specific softening and/or damping method employed are adjustable.

18. Door system according to one of claims 14 to 17, **characterized in that** the method of specific softening and/or damping incorporates metallic cushions (7, 8, 9, 10, 11, 12), which have been installed into the vehicle framework (4) with fastenings (13,14).

19. Door system according to one of claims 14 to 18, **characterized in that** the method of specific softening and/or damping incorporates metallic cushions (7, 8, 9, 10, 11, 12), which are suitable for the purpose by their shape and dimensions.

20. Door system according to one of claims 14 to 19, **characterized in that** the method of specific softening and/or damping incorporates at least one metallic cushion (7, 8, 9, 10, 11, 12), demonstrating a progressive elasticity curve.

21. Door system according to one of claims 14 to 20, **characterized in that** the method of specific softening and/or damping incorporates at least one metallic cushion (7, 8, 9, 10, 11, 12),that has been installed under tension.

22. Door system according to one of claims 14 to 21, **characterized in that** the door system has been developed for application as a sliding, revolving, swivelling or swinging door.

## Revendications

1. Système de porte destiné à des véhicules, en particulier des véhicules ferroviaires, comportant un encadrement de porte (5) et au moins un élément de raccordement permettant l'intégration dans une coque de véhicule (4), **caractérisé par** des moyens permettant un adoucissement et/ou un amortissement défini des forces de tension entre la coque du véhicule (4) et l'encadrement de porte (5).

2. Système de porte selon la revendication 1, **caractérisé en ce que** les moyens permettant l'adoucissement et/ou l'amortissement défini comportent un ou plusieurs rembourrages entièrement métalliques (7, 8, 9, 10, 11, 12), en particulier constitués d'un fil d'acier en CrNi.

3. Système de porte selon la revendication 1 ou 2, **caractérisé en ce que** les moyens permettant l'adoucissement et/ou l'amortissement défini comportent un ou plusieurs assemblages collés.

4. Système de porte selon l'une quelconque des revendications précédentes, **caractérisé en ce que** les caractéristiques d'adoucissement et/ou d'amortissement des moyens permettant l'adoucissement et/ou l'amortissement défini sont réglables.

5. Système de porte selon l'une quelconque des revendications précédentes, **caractérisé en ce qu'**un ou plusieurs rembourrages entièrement métalliques (7, 8, 10, 11) sont disposés entre l'encadrement de porte (5) et la caisse de voiture brute (4).

6. Système de porte selon l'une quelconque des revendications précédentes, **caractérisé en ce qu'**un ou plusieurs rembourrages entièrement métalliques (7, 8, 10, 11) et une ou plusieurs pièces d'écartement sont disposés entre l'encadrement de porte (5) et la caisse de voiture brute (4).

7. Système de porte selon l'une quelconque des revendications précédentes, **caractérisé en ce que** l'encadrement de porte (5) et la caisse de voiture brute (4) sont reliés l'un à l'autre à l'aide d'éléments de fixation (13, 14), en particulier des assemblages par vissage et / ou rivetage.

8. Système de porte selon l'une quelconque des revendications précédentes, **caractérisé en ce que** les moyens permettant l'adoucissement et/ou l'amortissement défini comportent des rembourrages entièrement métalliques (7, 8, 9, 10, 11, 12), qui sont disposés à l'aide d'éléments de fixation (13, 14) sur une caisse de voiture brute (4) et/ou sur l'encadrement de porte (5).

9. Système de porte selon l'une quelconque des revendications précédentes, **caractérisé en ce que** les moyens permettant l'adoucissement et/ou l'amortissement défini comportent des rembourrages entièrement métalliques (7, 8, 9, 10, 11, 12), qui sont adaptés en termes de forme et de dimensions à l'application souhaitée.

10. Système de porte selon l'une quelconque des revendications précédentes, **caractérisé en ce que** les moyens permettant l'adoucissement et/ou l'amortissement défini comportent au moins un rembourrage entièrement métallique (7, 8, 9, 10, 11, 12), dont la courbe d'élasticité présente une évolution progressive.

11. Système de porte selon l'une quelconque des revendications précédentes, **caractérisé en ce que** les moyens permettant l'adoucissement et/ou l'amortissement défini comportent au moins un rembourrage entièrement métallique (7, 8, 9, 10, 11, 12), qui est utilisé sous précontrainte.

12. Système de porte selon l'une quelconque des revendications précédentes, **caractérisé par** un dispositif (1) multifonctionnel, pouvant être retiré après l'intégration du système de porte dans la coque du véhicule (4), qui est configuré afin de soutenir, de transporter et de monter l'encadrement de porte (5), et est fixé sur l'encadrement de porte (5) avant d'être intégré dans la coque du véhicule (4), moyennant quoi le dispositif (1) présente des moyens permettant d'ajuster l'encadrement de porte (5) dans la coque du véhicule (4).

13. Système de porte selon l'une quelconque des revendications précédentes, **caractérisé en ce que** le système de porte est configuré pour être utilisé comme porte coulissante, rotative, pivotante et/ou oscillante.

14. Système de porte destiné à des véhicules, en particulier des véhicules ferroviaires, comportant un système de vantail de porte (2) et au moins un élément de raccordement permettant l'intégration dans une coque de véhicule (4), **caractérisé par** des moyens permettant l'adoucissement et/ou l'amortissement défini des forces de tension entre la coque du véhicule (4) et le système de vantail de porte (2).

15. Système de porte selon la revendication 14, **caractérisé en ce que** les moyens permettant l'adoucissement et/ou l'amortissement défini comportent un ou plusieurs rembourrages entièrement métalliques (7, 8, 9, 10, 11, 12), en particulier constitués d'un fil d'acier en CrNi.

16. Système de porte selon la revendication 14 ou 15, **caractérisé en ce que** les moyens permettant l'adoucissement et/ou l'amortissement défini comportent un ou plusieurs assemblages collés.

17. Système de porte selon l'une quelconque des revendications 14 à 16, **caractérisé en ce que** les caractéristiques d'adoucissement et/ou d'amortissement des moyens permettant l'adoucissement et/ou l'amortissement défini sont réglables.

18. Système de porte selon l'une quelconque des revendications 14 à 17, **caractérisé en ce que** les moyens permettant l'adoucissement et/ou l'amortissement défini comportent des rembourrages entièrement métalliques (7, 8, 9, 10, 11, 12), qui sont disposés à l'aide d'éléments de fixation (13, 14) sur la caisse de voiture brute (4).

19. Système de porte selon l'une quelconque des revendications 14 à 18, **caractérisé en ce que** les moyens permettant l'adoucissement et/ou l'amortissement défini comportent des rembourrages entièrement métalliques (7, 8, 9, 10, 11, 12), qui sont adaptés en termes de forme et de dimensions à l'application souhaitée.

20. Système de porte selon l'une quelconque des revendications 14 à 19, **caractérisé en ce que** les moyens permettant l'adoucissement et/ou l'amortissement défini comportent au moins un rembourrage entièrement métallique (7, 8, 9, 10, 11, 12), dont la courbe d'élasticité suit une évolution progressive.

21. Système de porte selon l'une quelconque des revendications 14 à 20, **caractérisé en ce que** les moyens permettant l'adoucissement et/ou l'amortissement défini comportent au moins un rembourrage entièrement métallique (7, 8, 9, 10, 11, 12), qui est utilisé sous précontrainte.

22. Système de porte selon l'une quelconque des revendications 14 à 21, **caractérisé en ce que** le système de porte est configuré pour être utilisé sous la forme de porte coulissante, rotative, pivotante et/ou oscillante.
